# FASCICULE DE BREVET EUROPEEN

(11) **EP 3 317 080 B1**
(45) Date de publication et mention de la délivrance du brevet: **04.09.2019**
(21) Numéro de dépôt: 16714846.9
(22) Date de dépôt: 31.03.2016
(51) Int. Cl.: B29C 55/16, B29C 55/20

(54) **MACHINE D'ÉTIRAGE DE FILM ET SON PROCÉDÉ DE DÉMARRAGE**
FOLIENSTRECKMACHINE UND IHR ANLAUFVERFAHREN
FILM STRETCHING MACHINE AND ITS START-UP METHOD

(30) Priorité: 30.06.2015 FR 1501376
(43) Date de publication de la demande: 09.05.2018
(73) Titulaire: Brückner Maschinenbau GmbH & Co. KG, 83313 Siegsdorf (DE)
(72) Inventeur: TRIVERO, Gilbert, 73800 La Chavanne (FR)
(74) Mandataire: Flach Bauer Stahl Patentanwälte Partnerschaft mbB
(86) Numéro de dépôt international: PCT/EP2016/057028
(87) Numéro de publication internationale: WO 2017/001068

(56) Documents cités:
- DE-A1-102012 025 487
- FR-A1- 2 922 810
- FR-A1- 2 924 048
- US-A- 2 412 187

## Description

La présente invention concerne les machines d'étirage de films ou de feuilles, notamment de films en matière plastique, et plus particulièrement les machines de ce genre étirant simultanément un film. L'invention vaut particulièrement pour l'étirage simultané angulaire. La matière plastique préchauffée est étirée simultanément dans le sens longitudinal et dans le sens transversal avec un angle d'étirage dans le film étiré qui est différent de 90°, en étant par exemple de 45° ou de 135°. On peut effectuer l'étirage simultané angulaire à l'aide d'une machine comprenant deux voies sans fin entrant et sortant d'un four en y divergeant et comprenant chacune un premier rail, sur lequel se déplacent des pinces, et un second rail, sur lequel se déplacent des chariots articulés, en une chaîne tirée par une roue dentée disposée à l'extérieur du four, à deux pinces consécutives. L'articulation de chaque chariot à deux pinces consécutives permet de régler le pas des pinces, c'est-à-dire leur distance mutuelle le long de la voie (voir par exemple FR 2 922 810 A1 qui décrit une machine d'étirage de film comprenant un four, dans lequel passe un brin d'une chaîne sans fin de pinces entraînée par au moins une roue dentée).

Ces machines peuvent avoir une longueur très grande dans la direction de traction de la chaîne, de plusieurs dizaines de mètres, par exemple de trente à quarante mètres. Notamment lorsque le film à étirer est relativement épais, en ayant par exemple une épaisseur de l'ordre de 100 microns, l'effort à fournir par une roue dentée disposée à l'extérieur du four pour tirer la chaîne est trop grand. Les efforts radiaux sur les rails sont énormes. Il s'ensuit une déviation du pas des pinces. L'imprécision du pas des pinces porte atteinte à la régularité de l'étirage et ainsi aux qualités optiques des films obtenus.

On connaît en outre une installation d'étirage du document FR 2 924 048 A. Ce document décrit un procédé pour étirer un film en matière synthétique sous la forme d'une bande allongée, dans lequel le film est préchauffé dans une première étape et le film est étiré transversalement à la direction longitudinale dans une seconde étape. Ici, pendant l'étape d'étirage en sens transversal le film subit un léger retrait en direction longitudinale.

Selon le document antérieur US 2,412,187, on connaît également un procédé et un dispositif pour étirer de façon biaxiale et en continu un film de matière plastique.

Enfin, le document DE 10 2012 025 487 A1 décrit un système de transport amélioré, en particulier pour une installation d'étirage. Ici, le rail porteur ou le rail de déplacement comporte une pluralité d'ouvertures de sortie qui sont ménagées et à travers lesquelles de l'air comprimé peut être acheminé via un canal en produisant un coussin d'air entre le rail porteur ou le rail de déplacement et une plaque-coussin sur couche d'air au niveau de l'unité à pince-et-chaîne.

La machine suivant l'invention pallie cet inconvénient en permettant, même pour des films épais, de fabriquer des films d'une meilleure qualité optique.

La machine d'étirage de film suivant l'invention, notamment du type ci-dessus, comprend un four, dans lequel passe un brin d'une chaîne sans fin de pinces entraînée par au moins une roue dentée. Elle est caractérisée en ce qu'au moins une roue dentée est à l'intérieur du four, est entraînée en rotation par son propre motoréducteur enveloppé d'un carter, mis dans le four et refroidi par des moyens de refroidissement, et est montée sur son propre dispositif de déplacement, de manière à passer d'une position en retrait, dans laquelle elle n'engrène pas avec la chaîne, à une position d'entraînement, dans laquelle elle engrène avec la chaîne.

Le four ayant une température d'environ 200°C, on n'avait pas cru jusqu'ici qu'il fût possible d'y mettre une roue dentée pouvant fonctionner correctement. Mais, si la roue dentée est entraînée en rotation par un motoréducteur enveloppé d'un carter, mis dans le four et refroidi par des moyens de refroidissement, le montage est fiable. Le motoréducteur et ses composants électroniques de commande sont protégés par le carter d'un échauffement trop grand qui porterait atteinte à leur fonctionnement, tandis que la roue dentée, qui est hors du carter, mais dont le fonctionnement est purement mécanique, peut résister à ces températures hautes.

De préférence, on prévoit plusieurs roues dentées à l'intérieur du four, ayant de préférence chacune au moins cinq dents. Chaque roue a son propre motoréducteur, lequel a son propre carter.

Pour solliciter la pince le moins possible mécaniquement, il est bon de l'associer dans la chaîne à un chariot ayant un galet qui pénètre dans l'entredent de la roue dentée à l'intérieur du four. En général, les galets de chariot ont un axe vertical et les pinces se ferment en un point de réglage de leur pas en dehors du four.

De préférence, le dispositif de déplacement est un dispositif de translation dans une direction perpendiculaire à la chaîne.

En général, les roues dentées à l'intérieur du four assistent dans la traction de la chaîne une ou plusieurs roues dentées à l'extérieur du four.

Une machine suivant l'invention a normalement deux chaînes divergentes l'une de l'autre dans le four, les pinces de l'une des chaînes se déplaçant sur des premiers rails et les chariots de la même chaîne sur des deuxièmes rails, cela étant valable pour chacune des chaînes.

Pour faciliter le démarrage de la machine, chaque roue dentée a son propre détecteur, qui détecte le pas des dents de la roue, la chaîne a un capteur propre à chaque roue, qui détecte le pas des pinces à l'endroit où la roue dentée va engrener avec elle, et une unité centrale de commande de la machine est reliée au capteur et au détecteur et, quand les pas coïncident, commande le dispositif de déplacement pour mettre la roue dans la position d'entraînement. On prévient ainsi une rupture des pièces mécaniques qui provoquerait une désynchronisation.

La commande est d'autant plus fiable que les fils d'alimentation électrique du motoréducteur sortent du carter par l'entrée, dans le carter, de l'air de refroidissement des moyens de refroidissement et que, dans l'entrée, les fils sont entourés d'un manchon commun, lui-même entouré à distance d'une gaine isolante thermiquement.

L'invention vise aussi un procédé de démarrage d'une machine d'étirage de film, caractérisé en ce que, alors que les roues sont en retrait, on contrôle l'adéquation des pas des dents de chaque roue avec le pas des pinces à l'endroit où chaque roue doit engrener avec la chaîne et, s'il y a adéquation, on synchronise à faible vitesse les vitesses de rotation des roues à la vitesse de déplacement de la chaîne, puis on met les roues en la position d'entraînement et on augmente toutes les vitesses en synchronisme.

Aux dessins annexés, donnés uniquement à titre d'exemple :

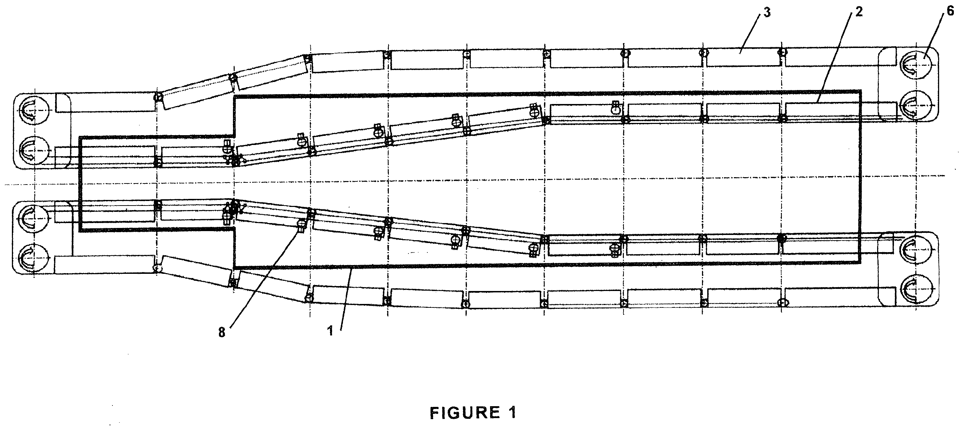

- la figure 1: est une vue schématique en plan d'une machine suivant l'invention, le haut du four étant enlevé ;
- la figure 2: est une vue en plan de la partie de la machine d'étirage comportant une paire de roues dentées intérieures ;

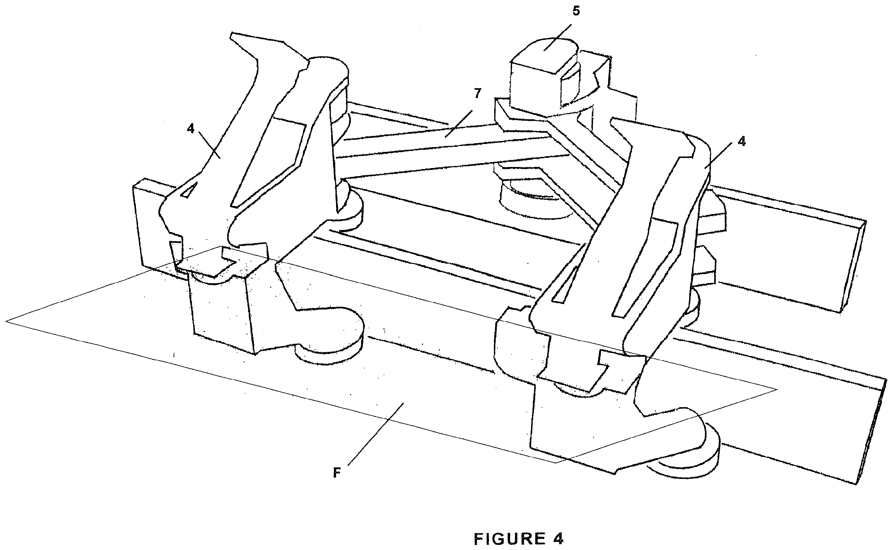

- la figure 3: est une vue en coupe suivant la ligne III-III de la figure 2 et

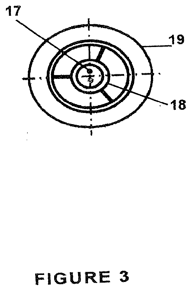

- la figure 4: est une vue en perspective d'une partie d'une chaîne d'une machine suivant l'invention.

La machine d'étirage de film suivant l'invention a un four 1 régulé en température, dans lequel passent des brins de deux voies identiques. Chaque voie a un premier rail 2 intérieur et un deuxième rail 3 extérieur, qui sont parallèles sur un brin, puis divergents. Les rails 2 et 3 sont sans fin. Sur le premier rail 2, se déplacent une multitude de pinces 4, qui se ferment en un point de réglage du pas sous une rampe fixe de fermeture des pinces. Le film F à étirer est tenu par les deux bords opposés par les pinces 4, qui peuvent être telles que décrites au brevet français 2 686 041. Sur le deuxième rail 3, se déplacent des chariots 5. Les chariots 5 sont articulés, en une chaîne, entraînée par quatre roues 6 dentées à l'extérieur du four 1, aux pinces 4. Deux pinces 4 consécutives sont articulées à un même chariot 5 par deux biellettes 7, de manière à régler le pas des pinces 4, c'est-à-dire leur distance mutuelle, lorsque l'angle entre les deux biellettes 7 se modifie. Les chariots 5 roulent par un galet vertical de roulement contre le rail 3 extérieur.

Outre les quatre roues 6 dentées d'entraînement de chaque chaîne à l'extérieur du four 1, il y a, à l'intérieur du four, six roues 8 dentées d'entraînement de chaque chaîne.

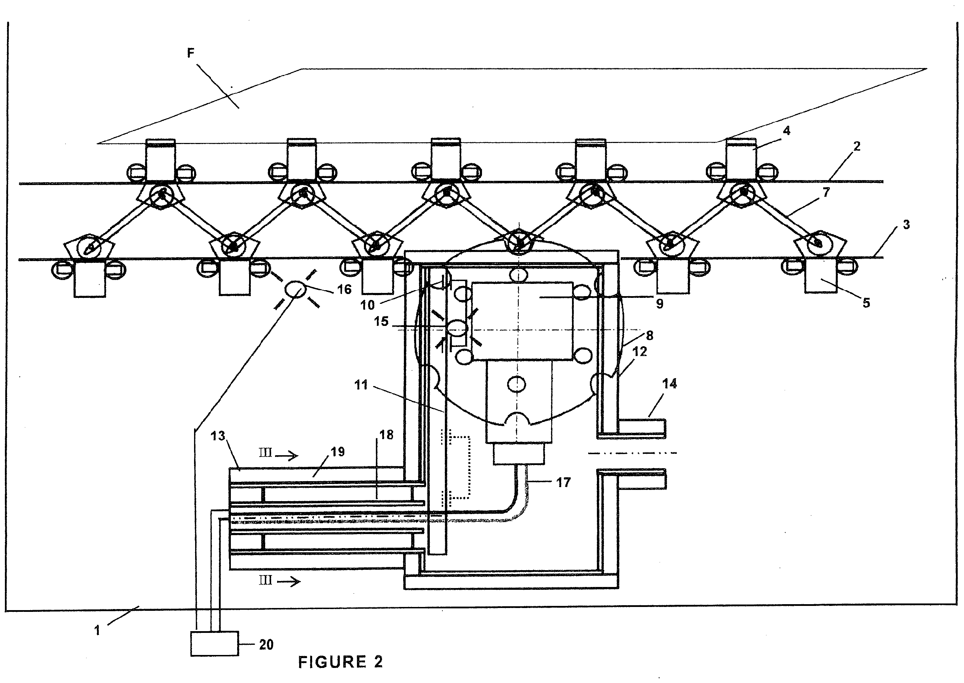

La figure 2 représente l'une de ces roues 8 dentées entraînée par son propre motoréducteur 9 et montée en translation par des patins 10 sur un rail 11, de manière à pouvoir passer d'une position de retrait, représentée en pointillés, dans laquelle elle n'engrène pas avec la chaîne, à une position d'entraînement, dans laquelle elle 8 engrène avec la chaîne. Le motoréducteur 9 est disposé à l'intérieur d'un carter 12. Le carter 12 est à l'intérieur du four 1. Il est refroidi par de l'air de refroidissement arrivant par une entrée 13 et ressortant par une sortie 14.

Il est associé à chaque roue 8 dentée son propre détecteur 15, qui en détecte le pas des dents. Et il est associé à chaque roue 8 dentée un capteur 16, qui détecte le pas des pinces 4 à l'endroit où la roue 8 dentée va engrener dans la chaîne ou près de cet endroit, de préférence, juste en amont dans le sens de déplacement de la chaîne.

Les deux fils 17 d'alimentation en électricité du motoréducteur 9 sortent du carter 12 par la sortie 13, en étant entourés d'un manchon 18, lui-même entouré à distance d'une gaine 19 isolante, l'air de refroidissement pénétrant à l'intérieur du carter 12 dans l'intervalle compris entre le manchon 18 et la gaine 19.

A l'extérieur du four 1, se trouve une unité 20 de commande, qui reçoit des informations des détecteurs 15 de chacune des roues 8 dentées et des capteurs 16 associés à chaque roue 8 dentée et commande les dispositifs 11 de déplacement des roues 8 dentées, pour les faire engrener avec la chaîne, après que l'adéquation des pas des dents de la roue 8 dentée au pas des pinces à l'endroit de la chaîne où la roue 8 doit engrener a été contrôlée et après que les vitesses de la roue 8 et de la chaîne ont été synchronisées.

S'il y a adéquation, on synchronise à faible vitesse les vitesses de rotation des roues 8 à la vitesse de déplacement de la chaîne, on met les roues 8 en position d'entraînement, dans lesquelles elles engrènent avec la chaîne, puis on augmente toutes les vitesses en synchronisme.

S'il n'y a pas adéquation, on change de roue 8 dentée et on recommence les étapes ci-dessus.

## Revendications

1. Machine d'étirage de film, comprenant un four (1), dans lequel passe un brin d'une chaîne sans fin de pinces (4) entraînée par au moins une roue (8) dentée, **caractérisée en ce qu'**au moins une roue (8) dentée :
- est à l'intérieur du four (1),
- est entraînée en rotation par son propre motoréducteur (9) enveloppé d'un carter (12), mis dans le four (1) et refroidi par des moyens (13, 14) de refroidissement et
- est montée sur son propre dispositif (11) de déplacement, de manière à passer d'une position en retrait, dans laquelle elle n'engrène pas avec la chaîne, à une position d'entraînement, dans laquelle elle engrène avec la chaîne.

2. Machine suivant la revendication 1, **caractérisée en ce que** le dispositif (11) de déplacement est un dispositif de translation dans une direction perpendiculaire à la chaîne.

3. Machine suivant la revendication 1 ou 2, **caractérisée en ce que** chaque roue (8) dentée a son propre détecteur (15), qui détecte le pas des dents de la roue (8) dentée.

4. Machine suivant l'une des revendications 1 à 3, **caractérisée en ce que** la chaîne a un capteur (16) propre à chaque roue (8) dentée, qui détecte les pas des pinces (4) à l'endroit de la chaîne où la roue (8) dentée doit engrener avec la chaîne.

5. Machine suivant les revendications 3 et 4 prises ensemble, **caractérisée en ce qu'**une unité (20) centrale de commande de la machine est reliée au capteur (16) et au détecteur (15) et, quand les pas qu'il détectent coïncident, commande le dispositif de déplacement pour mettre la roue (8) dentée dans la position d'entraînement.

6. Machine suivant l'une des revendications 1 à 5, **caractérisée en ce que** les fils (17) d'alimentation électrique du motoréducteur (9) sortent du carter (12) par l'entrée (13), dans le carter (12), de l'air de refroidissement des moyens de refroidissement.

7. Machine suivant la revendication 6, **caractérisée en ce que**, dans l'entrée (13), les fils (17) sont entourés d'un manchon (18) commun, lui-même entouré à distance d'une gaine (19) isolante thermiquement.

8. Procédé de démarrage d'une machine d'étirage de film suivant l'ensemble des revendications 1 ou 2 et 3 à 5, **caractérisé en ce que**, alors que les roues sont en retrait, on contrôle l'adéquation des pas des dents de chaque roue avec le pas des pinces à l'endroit où chaque roue doit engrener avec la chaîne et, s'il y a adéquation, on synchronise à faible vitesse les vitesses de rotation des roues à la vitesse de déplacement de la chaîne, puis on met les roues en la position d'entraînement et on augmente toutes les vitesses en synchronisme.

## Patentansprüche

1. Folienstreckmaschine, umfassend einen Ofen (1), in dem ein Strang einer endlosen Greiferkette (4) verläuft, die von mindestens einem Zahnrad (8) angetrieben wird, **dadurch gekennzeichnet, dass** mindestens ein Zahnrad (8)
- sich im Innern des Ofens (1) befindet,
- von seinem eigenen Getriebemotor (9), der von einem Gehäuse (12) umschlossen ist, in Drehung versetzt wird, in den Ofen (1) eingeführt und durch Kühleinrichtungen (13, 14) gekühlt wird, und
- auf seiner eigenen Verschiebevorrichtung (11) montiert ist, um von einer zurückgestellten Position, in der es nicht in die Kette eingreift, in eine Antriebsposition, in der es in die Kette eingreift, überzugehen.

2. Maschine nach Anspruch 1, **dadurch gekennzeichnet, dass** die Verschiebevorrichtung (11) eine Bewegungsvorrichtung in einer Richtung senkrecht zur Kette ist.

3. Maschine nach Anspruch 1 oder 2, **dadurch gekennzeichnet, dass** jedes Zahnrad (8) seinen eigenen Detektor (15) aufweist, der den Vorbeilauf der Zähne des Zahnrads (8) erfasst.

4. Maschine nach einem der Ansprüche 1 bis 3, **dadurch gekennzeichnet, dass** die Kette einen eigenen Sensor (16) für jedes Zahnrad (8) aufweist, der den Vorbeilauf der Greifer (4) an der Stelle der Kette erfasst, an der das Zahnrad (8) mit der Kette in Eingriff kommen muss.

5. Maschine nach den Ansprüchen 3 und 4 zusammengenommen, **dadurch gekennzeichnet, dass** eine zentrale Steuereinheit (20) der Maschine mit dem Sensor (16) und dem Detektor (15) verbunden ist und, wenn die von ihr erfassten Vorbeiläufe übereinstimmen, die Verschiebevorrichtung steuert, um das Zahnrad (8) in die Antriebsposition zu bringen.

6. Maschine nach einem der Ansprüche 1 bis 5, **dadurch gekennzeichnet, dass** die Stromversorgungsleitungen (17) des Getriebemotors (9) das Gehäuse (12) durch den Einlass (13) der Kühlluft der Kühleinrichtung in das Gehäuse (12) verlassen.

7. Maschine nach Anspruch 6, **dadurch gekennzeichnet, dass** die Drähte (17) im Einlass (13) von einem gemeinsamen Mantel (18) umgeben sind, der selbst in einem Abstand von einer wärmeisolierenden Hülle (19) umgeben ist.

8. Verfahren zum Starten einer Folienstreckmaschine nach allen Ansprüchen 1 oder 2 und 3 bis 5, **dadurch gekennzeichnet, dass**, wenn die Räder zurückgestellt sind, die Eignung der Vorbeiläufe der Zähne von jedem Rad mit dem Vorbeilauf der Greifer an der Stelle überprüft wird, an dem jedes Rad mit der Kette in Eingriff kommen soll, und, wenn eine Eignung besteht, werden die Drehzahlen der Räder mit der Verschiebegeschwindigkeit der Kette auf eine niedrige Geschwindigkeit synchronisiert, dann werden die Räder in die Antriebsposition gebracht und alle Drehzahlen werden synchronisiert erhöht.

## Claims

1. Film-drawing machine, comprising a furnace (1),
through which one strand of an endless chain of clamps (4) passes, which chain is driven by at least one toothed wheel (8), **characterised in that** at least one toothed wheel (8):
- is inside the furnace (1),
- is rotated by its own gear motor (9) surrounded by a casing (12), placed in the furnace (1) and cooled by cooling means (13, 14), and
- is mounted on its own movement device (11), so as to pass from a retracted position, in which it does not mesh with the chain, to a drive position, in which it meshes with the chain.

2. Machine according to claim 1, **characterised in that** the movement device (11) is a device for translating in a direction perpendicular to the chain.

3. Machine according to either claim 1 or claim 2, **characterised in that** each toothed wheel (8) comprises its own detector (15) which detects the tooth pitch of the toothed wheel (8).

4. Machine according to any of claims 1 to 3, **characterised in that** the chain comprises a sensor (16) which is specific to each toothed wheel (8) and detects the pitches of the clamps (4) at the point on the chain where the toothed wheel (8) is intended to mesh with the chain.

5. Machine according to claims 3 and 4 considered together, **characterised in that** a central control unit (20) of the machine is connected to the sensor (16) and to the detector (15) and, when the pitches detected by said sensor and said detector match, controls the movement device in order to place the toothed wheel (8) into the drive position.

6. Machine according to any of claims 1 to 5, **characterised in that** the power supply wires (17) for the gear motor (9) leave the casing (12) through the inlet (13), in the casing (12), for the cooling air from the cooling means.

7. Machine according to claim 6, **characterised in that**, in the inlet (13), the wires (17) are surrounded by a shared sleeve (18), which is itself surrounded at a distance by a thermally insulating sheath (19).

8. Method for starting a film-drawing machine according to all of claims 1 or 2 and 3 to 5, **characterised in that**, while the wheels are retracted, the matching of the tooth pitch of each wheel with the clamp pitch at the point where each wheel is intended to mesh with the chain is monitored and, if there is matching, the speed of rotation of the wheels is synchronised at low speed with the movement speed of the chain, then the wheels are placed in the drive position and all speeds are increased synchronously.
